# EUROPÄISCHE PATENTANMELDUNG

(11) **EP 2 564 945 A2**
(43) Veröffentlichungstag der Anmeldung: **06.03.2013**
(21) Anmeldenummer: 12173918.9
(22) Anmeldetag: 27.06.2012
(51) Int. Cl.: B08B 3/02, B08B 3/00, B08B 9/08, B60S 3/04

(54) **Waschanlage zum Reinigen von insbesondere sperrigem Spülgut**

(30) Priorität: 30.08.2011 DE 102011081834
(71) Anmelder: Premark FEG L.L.C., Wilmington, Delaware 19801 (US)
(72) Erfinder: Litterst, Jürgen, 77767 Appenweier (DE); Neumaier, Werner, 77656 Offenburg (DE); Blust, Markus, 77880 Sasbach (DE); Götz, Norbert, 77972 Mahlberg (DE)
(74) Vertreter: Trinks, Ole

(57) **Zusammenfassung**

Die Erfindung betrifft eine Waschanlage (100) zum Reinigen von insbesondere sperrigem Spülgut (50), wie etwa Rauchwagen oder Stikkenwagen. Hierzu weist die Waschanlage (100) eine im Reinigungsbetrieb geschlossene Waschkammer (10) und ein Waschsystem auf. Das Waschsystem umfasst mindestens eine in der Waschkammer (10) angeordnete Reinigersprühdüse (1a, 1b, 1c, 1d, 1e) und eine über ein Reinigerzufuhrleitungssystem (2) mit der mindestens einen Reinigersprühdüse 1a, 1b, 1c, 1d, 1e) verbundene oder verbindbare Reinigerpumpe (3). Um zu erreichen, dass mit der Waschanlage (100) auch Spülgut mit hartnäckigen Verschmutzungen wirksam gereinigt werden kann, wobei gleichzeitig der Verbrauch an Reinigerchemikalie reduziert wird, ist erfindungsgemäß vorgesehen, dass das Waschsystem der Waschanlage (100) mindestens eine Einrichtung zum Erzeugen von Reinigerschaum aufweist, welcher im Reinigungsbetrieb über die mindestens eine Reinigersprühdüse (1a, 1b, 1c, 1d, 1e) auf das in der Waschkammer (10) Spülgut (50) auftragbar, insbesondere sprühbar ist.

## Beschreibung

Die vorliegende Erfindung betrifft eine Waschanlage nach dem Oberbegriff des unabhängigen Patentanspruches 1.

Demgemäß betrifft die Erfindung insbesondere eine Waschanlage zum Reinigen von insbesondere sperrigem Spülgut, wie etwa Rauchwagen oder Stikkenwagen, wobei die Waschanlage eine im Reinigungsbetrieb geschlossene Waschkammer und ein Waschsystem mit mindestens einer in der Waschkammer angeordneten Reinigersprühdüse und einer über ein Reinigerzufuhrleitungssystem mit der mindestens einen Reinigersprühdüse verbundenen oder verbindbaren Reinigerpumpe aufweist.

Eine derartige Waschanlage ist zumindest dem Prinzip nach bereits aus dem Stand der Technik bekannt. Beispielsweise offenbart die Druckschrift DE 89 061 76 U1 eine Waschanlage, die vornehmlich zum Reinigen von Rauchwagen dient, welche beim Räuchern von Fleisch- oder Wurstwaren oder dergleichen eingesetzt werden. Hierbei wird vorgeschlagen, innerhalb einer Waschkammer den Rauchwagen mit einer flüssigen Reinigerlösung zu besprühen, wobei die versprühte Reinigerflüssigkeit anschließend durch Schwerkraft in eine im Bodenbereich der Waschkammer vorgesehene Abflussöffnung abfließt.

Um mit dieser bekannten Waschanlage auch Spülgut mit hartnäckigen Verschmutzungen wirksam reinigen zu können, ist es erforderlich, die Kontakt- bzw. Einwirkzeit, d.h. die Zeit, in der die im Reinigungsbetrieb der Waschanlage auf das Spülgut versprühte Reinigerflüssigkeit das Spülgut benetzt, entsprechend zu verlängern. Nur dann können hartnäckige Verschmutzungen, wie etwa angetrocknete Speisereste etc., wirksam von dem Spülgut abgelöst werden. Alternativ oder zusätzlich hierzu ist es bei der aus dem Stand der Technik bekannten Lösung denkbar, bei stark verschmutztem Spülgut die Reinigerdosierung, d.h. die Konzentration an Reiniger in der Reinigerflüssigkeit, entsprechend zu erhöhen.

Demgemäß ist es bei herkömmlichen, aus dem Stand der Technik bekannten Waschanlagen nicht vermeidbar, dass der Verbrauch an Reinigerflüssigkeit bzw. Reiniger bei der Behandlung von stark verschmutztem Spülgut deutlich zunimmt.

Dies gilt insbesondere dann, wenn in der Waschanlage Spülgut mit eingebrannten Verschmutzungen zu reinigen ist, wie es häufig bei Rauchwagen oder Stikkenwagen der Fall ist.

Auf Grundlage dieser Problemstellung liegt der vorliegenden Erfindung die Aufgabe zugrunde, eine Waschanlage der eingangs genannten Art, und wie sie beispielsweise aus der Druckschrift DE 89 06 176 U1 bekannt ist, dahingehend weiterzubilden, dass auch stark verschmutztes Spülgut, insbesondere Spülgut mit eingebrannten Verunreinigungen, wirksam gereinigt werden kann, wobei gleichzeitig Ressourcen (Reinigerchemie, Wasser und Energie) eingespart werden können.

Diese Aufgabe wird erfindungsgemäß durch den Gegenstand des unabhängigen Patentanspruches 1 gelöst.

Insbesondere zeichnet sich die erfindungsgemäße Waschanlage gegenüber herkömmlichen und vorstehend beschriebenen Waschanlagen dadurch aus, dass das Waschsystem der Waschanlage mindestens eine Einrichtung zum Erzeugen von Reinigerschaum aufweist, welcher im Reinigungsbetrieb der Waschanlage über die mindestens eine in der Waschkammer der Waschanlage angeordnete Reinigersprühdüse auf das in der Waschkammer angeordnete Spülgut auftragbar, insbesondere sprühbar ist.

Die mit der erfindungsgemäßen Lösung erzielbaren Vorteile liegen auf der Hand: dadurch, dass in der Waschkammer der Waschanlage keine flüssige Reinigerlösung auf das Spülgut gesprüht wird, wie es bei den herkömmlichen Waschanlagen der Fall ist, sondern ein Reinigerschaum auf das Spülgut aufgetragen bzw. aufgesprüht wird, lässt sich die Kontakt- bzw. Einwirkzeit, d.h. die Zeit, in der die in dem Reinigerschaum enthaltene Reinigerchemikalie in Kontakt mit der Oberfläche des zu reinigenden Spülguts steht, hinreichend verlängern, ohne dass hierzu eine größere Menge an Reinigerchemikalie eingesetzt werden muss. Hierbei wird der Effekt ausgenutzt, dass der auf das Spülgut aufgetragene Reinigerschaum auch an senkrechten Flächen des Spülgutes hinreichend lange haften bleibt, um auch hartnäckige Verkrustungen aufzuweichen bzw. vom Spülgut abzulösen. Des Weiteren sind mit dem in der Waschkammer versprühten Reinigerschaum auch schwer zugängliche Bereiche des Spülgutes erreichbar, da der Schaum eine entsprechende Kriechwirkung aufweist.

Demnach ist die erfindungsgemäße Waschanlage ausgelegt, bei im Vergleich zu herkömmlichen Waschanlagen reduziertem Verbrauch an Reinigerchemikalie auch stark verschmutztes Spülgut wirksam zu reinigen. Insbesondere können mit der Waschanlage auch Stikkenwagen oder Backbleche, also Spülgut mit eingebrannten Verschmutzungen, in wirtschaftlicher und zugleich effektiver Weise gereinigt werden.

Vorteilhafte Weiterbildungen der erfindungsgemäßen Waschanlage sind in den abhängigen Patentansprüchen angegeben.

So ist in einer bevorzugten Realisierung der erfindungsgemäßen Waschanlage vorgesehen, dass die mindestens eine Reinigersprühdüse als Schaumdüse ausgebildet ist, welche einen über das Reinigerzufuhrleitungssystem mit der Reinigerpumpe verbundenen oder verbindbaren Reinigereinlass und einen Lufteinlass aufweist und ausgebildet ist, bei Zufuhr einer schäumbaren Reinigerflüssigkeit über den Reinigereinlass Reinigerschaum am Düsenauslass zu erzeugen. Mit dieser Ausführungsform kann eine große Menge an Reinigerschaum innerhalb kürzester Zeit mit Hilfe einer relativ kleinen Menge an Reinigerflüssigkeit aus der als Schaumdüse ausgebildeten Reinigersprühdüse abgegeben werden. Vorzugsweise weist die der mindestens einen als Schaumdüse ausgebildeten Reinigersprühdüse zugeführte Reinigerflüssigkeit eine Reinigerchemikalie sowie einen Aufschäumer, vorzugsweise ein nichtionisches Tensid auf, wobei dieser Aufschäumer zuvor der Reinigerflüssigkeit zudosiert wurde. Da der mit der als Schaumdüse ausgebildeten mindestens einen Reinigersprühdüse erzeugte Reinigerschaum ein Tensid enthält, ist dieser Reinigerschaum fließfähig und bereitet sich schnell über die Kontaktflächen des zu reinigenden Spülgutes aus, die der Reinigerschaum somit ohne Weiteres wirksam benetzt. Indem der Wasseranteil der im Reinigereinlass der als Schaumdüse ausgebildeten Reinigersprühdüse zugeführten Reinigerflüssigkeit entsprechend hoch gewählt wird, weist der von der als Schaumdüse ausgebildeten Reinigersprühdüse erzeugte Reinigerschaum eine relativ lange Lebensdauer auf, da das Zusammenfallen des Reinigerschaums hauptsächlich auf die Verdunstung des Bestandteils Wasser in dem Reinigerschaum zurückzuführen ist. Mithin bleibt der Reinigerschaum, wenn keine Wärme vorhanden ist, meist über einen relativ langen Zeitraum stabil.

In einer möglichen Realisierung der zuletzt genannten Ausführungsform, bei welcher die mindestens eine Reinigersprühdüse als Schaumdüse ausgebildet ist, weist die Reinigersprühdüse ein Sieb, beispielsweise ein Lochsieb aus Metall, eine Siebanordnung bestehend aus mehreren beabstandeten horizontalen Sieben oder ein konisches Sieb, auf, welches eine Schäumungsfläche bereitstellt, so dass die auf das Sieb gesprühte schäumbare Reinigerflüssigkeit Luft aus dem Lufteinlass der Reinigersprühdüse saugt, wodurch der Reinigerschaum erzeugt wird. Vorzugsweise ist hierbei der Lufteinlass der Reinigersprühdüse als Venturi-Rohr ausgebildet. In diesem Fall ist es bevorzugt, wenn die Reinigerflüssigkeit unter Druck stehend über den Reinigereinlass der als Schaumdüse ausgebildeten mindestens einen Reinigersprühdüse zugeführt wird. Der Druck der der Reinigersprühdüse zugeführten Reinigerflüssigkeit wird dabei vorzugsweise durch die Reinigerpumpe erzeugt.

Alternativ oder zusätzlich hierzu ist es denkbar, dass der Lufteinlass der als Schaumdüse ausgebildeten mindestens einen Reinigersprühdüse mit einer Druckluftquelle verbunden oder verbindbar ist. Bei dieser Druckluftquelle kann es sich beispielsweise um einen mit Hilfe einer Steuereinrichtung ansteuerbaren Kompressor handeln. Indem der Druck und/oder die pro Zeiteinheit der als Schaumdüse ausgebildeten mindestens eine Reinigersprühdüse zugeführte Druckluft verändert werden/wird, kann die Hüllfläche oder Blasengröße des erzeugten Reinigerschaums und somit die Fließfähigkeit und/oder Festigkeit des Reinigerschaums variiert und an die Art des zu reinigenden Spülguts bzw. an den Verschmutzungsgrad des zu reinigenden Spülguts angepasst werden.

Alternativ oder zusätzlich zu mindestens einer als Schaumdüse ausgebildeten Reinigersprühdüse ist es denkbar, dass das Waschsystem einen Schaumgenerator aufweist, welcher einen Reinigereinlass und einen Lufteinlass aufweist und ausgebildet ist, bei Zufuhr einer schäumbaren Reinigerflüssigkeit über den Reinigereinlass Reinigerschaum zu erzeugen und diesen am Auslass des Schaumgenerators bereitzustellen. Der Auslass des Schaumgenerators sollte dabei über das Reinigerzufuhrleitungssystem mit der mindestens einen Reinigersprühdüse verbunden oder verbindbar sein.

In dem Schaumgenerator wird durch Mischen der schäumbaren Reinigerflüssigkeit und Luft der Reinigerschaum erzeugt. Hierbei ist es von Vorteil, wenn die Reinigerpumpe Bestandteil des Schaumgenerators ist und einer Mischkammer des Schaumgenerators die schäumbare Reinigerflüssigkeit zuführt. Der Lufteinlass des Schaumgenerators kann als Venturi-Rohr ausgebildet sein, so dass die zum Erzeugen des Reinigerschaums erforderliche Luft von selbst eingesogen wird. Bevorzugt ist allerdings, den Lufteinlass des Schaumgenerators mit einer Druckluftquelle, wie etwa einem Ventilator oder Kompressor zu verbinden, um sicherzustellen, dass der von dem Schaumgenerator erzeugte Reinigerschaum die zum Benetzen des zu reinigenden Spülguts notwendigen Anforderungen, insbesondere Fließfähigkeit und Stabilität, aufweist.

In einer bevorzugten Realisierung der erfindungsgemäßen Lösung ist vorgesehen, dass die Reinigerpumpe der Waschanlage über ihren saugseitigen Einlass mit einem Reinigertank, welcher entweder Teil der Waschanlage oder außerhalb der Waschanlage angeordnet ist, und über ihren druckseitigen Auslass mit dem Reinigerzufuhrleitungssystem verbunden oder verbindbar ist, wobei ferner eine vorzugsweise mit einer Steuereinrichtung ansteuerbare Dosiereinrichtung vorgesehen ist, um wahlweise eine Aufschäumerlösung, insbesondere eine Tensidhaltige Aufschäumerlösung, in die mittels der Reinigerpumpe angesaugte Reinigerlösung einzudosieren. Bei dieser Weiterbildung der erfindungsgemäßen Waschanlage ist es somit möglich, beispielsweise abhängig von dem Verschmutzungsgrad oder der Art des Spülgutes die Schaumerzeugung zu- bzw. abzuschalten. Hierbei ist zu berücksichtigen, dass der Reinigerschaum nur dann wirksam erzeugt werden kann, wenn in die mittels der Reinigerpumpe angesaugte Reinigerlösung eine Aufschäumerchemikalie eindosiert ist.

Gemäß einer Ausgestaltung der erfindungsgemäßen Waschanlage weist das Waschsystem einen vorzugsweise motorisch angetriebenen Sprühdüsenträger auf, an welchem die mindestens eine Reinigersprühdüse angeordnet ist, wobei dieser Sprühdüsenträger relativ zu einem in der Waschkammer der Waschanlage aufgenommenen Spülgut bewegbar ist. Auf diese Weise lässt sich das in der Waschkammer aufgenommene Spülgut aus wechselnden Richtungen mit dem Reinigerschaum beaufschlagen. Insbesondere ist dabei denkbar, dass sich der Sprühdüsenträger sowohl im Bereich der geschlossenen Seitenwände der Waschkammer als auch im Bereich der im Reinigungsbetrieb der Waschanlage geschlossenen Eingangs- bzw. Ausgangsseiten der Waschkammer bewegt.

Alternativ oder zusätzlich hierzu ist es denkbar, eine Vielzahl von Reinigersprühdüsen an einem Sprühdüsenrahmen anzuordnen, dessen Form in Draufsicht dem Grundriss der Waschkammer angepasst ist, wobei sich dieser Rahmen zusammen mit den daran befestigten Reinigersprühdüsen relativ zu dem in der Waschkammer angeordneten Spülgut bewegen lässt.

Konstruktiv einfacher und im Hinblick auf eine wirksame Reinigung zweckmäßiger ist jedoch eine relativ zu der mindestens einen Reinigersprühdüse bewegbare, insbesondere in der horizontalen Ebene drehbare Aufnahme zum Aufnehmen des zu reinigenden Spülgutes. Bei dieser Ausführungsform ist es möglich, die mindestens eine Reinigersprühdüse relativ zu der Waschkammer ortsfest anzuordnen, wobei nur das zu reinigende Spülgut relativ zu der mindestens einen Reinigersprühdüse bewegt wird, und zwar vorzugsweise derart, dass das Spülgut aus wechselnden Richtungen mit dem Reinigerschaum beaufschlagbar ist. Die Aufnahme ist vorzugsweise in Gestalt eines motorisch antreibbaren Drehtellers ausgeführt. Alternativ hierzu ist es allerdings auch denkbar, die Aufnahme als Kreuztischanordnung auszuführen.

In einer bevorzugten Weiterbildungen der zuletzt genannten Ausführungsform ist vorgesehen, dass die Aufnahme mindestens bereichsweise als Gitterrost ausgebildet ist, wobei im Bodenbereich der Waschkammer ein mit einem Abwassersystem verbundener oder verbindbarer Abfluss vorgesehen ist, über den nach Beendigung des Reinigungsbetriebs der Reinigerschaum aus der Waschkammer abführbar ist.

Alternativ hierzu ist es denkbar, dass der Bodenbereich der Waschkammer als Pumpensumpf ausgebildet ist, wobei ferner eine Abwasserpumpe vorgesehen ist, deren saugseitiger Einlass mit dem Pumpensumpf und deren druckseitiger Auslass mit einem Abwassersystem verbunden oder verbindbar ist.

In einer bevorzugten Weiterbildung der erfindungsgemäßen Waschanlage ist vorgesehen, dass diese zusätzlich zu dem bereits beschriebenen Waschsystem auch ein Klarspülsystem mit mindestens einer in der Waschkammer angeordneten Klarspüldüse und einem mit der mindestens einen Klarspüldüse verbundenen oder verbindbaren Klarspülflüssigkeits-Zufuhrleitungssystem aufweist. Über das Klarspülflüssigkeits-Zufuhrleitungssystem wird im Klarspülbetrieb der Waschanlage Klarspülflüssigkeit, insbesondere Frischwasser, welchem gegebenenfalls ein Klarspüler zudosiert ist, zu der mindestens einen Klarspüldüse zugeführt. Durch das Vorsehen eines derartigen Klarspülsystems wird dem Umstand Sorge getragen, dass das Spülgut in der Waschkammer wirksam von der Reinigerchemikalie zu befreien ist, um den hygienischen Anforderungen zu erfüllen.

Bei der zuletzt genannten Ausführungsform, bei welcher die Waschanlage ein Klarspülsystem aufweist, ist vorzugsweise vorgesehen, dass das Klarspülsystem ferner eine Klarspülpumpe umfasst, deren saugseitiger Einlass mit einem Klarspülflüssigkeitstank und deren druckseitiger Auslass mit dem Klarspülflüssigkeits-Zufuhrleitungssystem verbunden oder verbindbar ist. Der Klarspülflüssigkeitstank kann Teil der Waschanlage sein. Denkbar ist jedoch auch, den Klarspülflüssigkeitstank außerhalb der Waschanlage vorzusehen. Alternativ hierzu ist es selbstverständlich auch möglich, das Klarspülflüssigkeits-Zufuhrleitungssystem direkt mit beispielsweise einem bauseitigen Frischwassernetz zu verbinden.

Durch das Vorsehen eines Klarspülflüssigkeitstankes, in welchem die im Klarspülbetrieb der Waschanlage über die mindestens eine Klarspüldüse zu versprühende Klarspülflüssigkeit zwischengespeichert wird, ist es möglich, die Klarspülflüssigkeit vorab zu erwärmen, und zwar indem der Klarspülflüssigkeitstank mit einer vorzugsweise über eine Steuereinrichtung ansteuerbare Heizung versehen wird. Durch die Verwendung einer erwärmten Klarspülflüssigkeit kann das Klarspülergebnis optimiert werden. Gleichzeitig wird mit der erwärmten Klarspülflüssigkeit das Spülgut aufgewärmt, so dass nach Beendigung des Klarspülbetriebes der Waschanlage zumindest teilweise eine Selbsttrocknung des Spülgutes auftritt.

Schließlich ist es bevorzugt, wenn die Waschanlage ausgelegt ist, das zu reinigende Spülgut wahlweise automatisch zu behandeln. In einer bevorzugten Realisierung der erfindungsgemäßen Lösung ist dabei eine Steuereinrichtung vorgesehen, welche dazu dient, die ansteuerbaren Komponenten des Waschsystems, insbesondere die Reinigerpumpe, und/oder die ansteuerbaren Komponenten des Klarspülsystems, insbesondere die Klarspülpumpe, bedarfsweise derart anzusteuern, dass der Klarspülbetrieb der Waschanlage, während welchem Klarspülflüssigkeit in der Waschkammer versprüht wird, erst nach Beendigung des Reinigungsbetriebs der Waschanlage, während welchem Reinigerschaum in der Waschkammer versprüht wird, initiiert wird.

Hierbei ist es insbesondere von Vorteil, wenn die Steuereinrichtung ausgelegt ist, den Klarspülbetrieb der Waschanlage, während welchem Klarspülflüssigkeit in der Waschkammer versprüht wird, zeitlich verzögert zu initiieren, und zwar erst dann, wenn während des Reinigungsbetriebs der Waschanlage der Reinigerschaum in der Waschkammer versprüht wurde. Die Dauer der zeitlichen Verzögerung und somit die Einwirk- bzw. Kontaktzeit der in dem Reinigerschaum enthaltenen Reinigerchemikalie ist vorzugsweise abhängig von dem Verschmutzungsgrad des zu reinigenden Spülguts einstellbar.

Da zu verhindern ist, dass im Betrieb der Waschanlage Personen mit der Reinigungschemikalie in Berührung kommen, ist in einer bevorzugten Realisierung der Waschanlage vorgesehen, dass die Waschkammer mindestens eine verschließbare Öffnung aufweist, über welche das zu reinigende Spülgut in die Waschkammer einbringbar ist, wobei ferner eine Sensoreinrichtung vorgesehen ist zum Erfassen, ob die Öffnung verschlossen ist, und wobei die Steuereinrichtung ausgelegt ist, den Reinigungsbetrieb der Waschanlage nur bei verschlossener Öffnung zu initiieren. Mit dieser Maßnahme ist es für das Bedienungspersonal beim betrieb der Waschanlage insbesondere nicht mehr erforderlich, Schutzanzüge, Gummihandschuhe und/oder Atemmasken zu tragen.

Nachfolgend wird unter Bezugnahme auf die beiliegenden Zeichnungen eine exemplarische Ausführungsform der erfindungsgemäßen Waschanlage beschrieben.

Es zeigen:
- Fig. 1: eine perspektivische Ansicht auf eine exemplarische Ausführungsform der erfindungsgemäßen Waschanlage;
- Fig. 2: eine Seitenansicht der in Fig. 1 gezeigten Waschanlage;
- Fig. 3: eine perspektivische Ansicht einer bei der Waschanlage gemäß Fig. 1 vorgesehenen Waschkammer mit eingesetztem Spülgut (Stikkenwagen); und
- Fig. 4: eine perspektivische Ansicht auf den in der Waschkammer gemäß Fig. 3 eingesetzten Stikkenwagen.

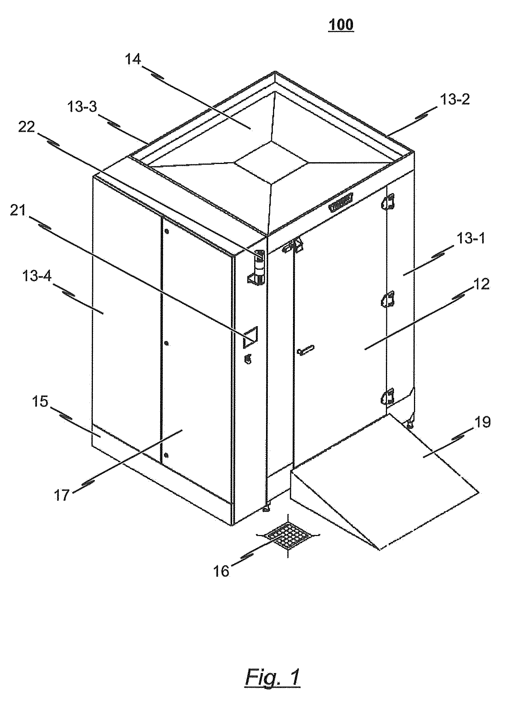

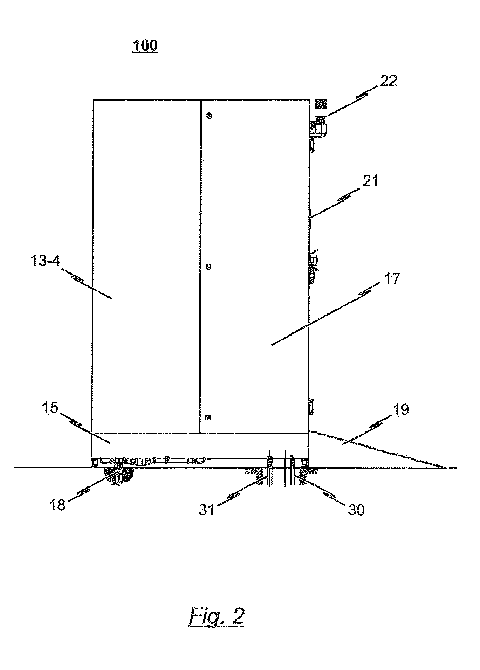

In Fig. 1 ist in einer perspektivischen Ansicht eine exemplarische Ausführungsform der erfindungsgemäßen Waschanlage 100 gezeigt. Eine Seitenansicht dieser Waschanlage 100 ist der Darstellung in Fig. 2 entnehmbar.

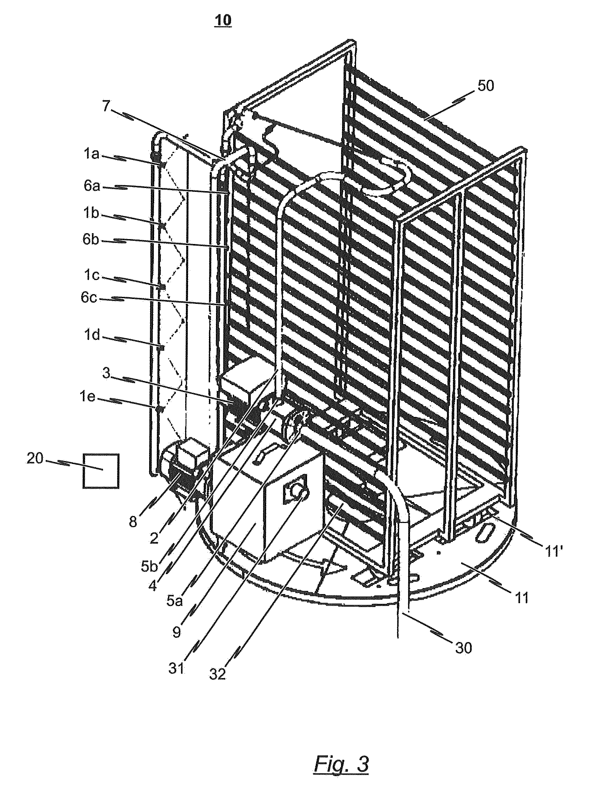

Demgemäß weist die Waschanlage 100 ein kastenförmiges Gehäuse bestehend aus insgesamt vier Seitenwänden 13-1, 13-2, 13-3, 13-4, einer Gehäusedecke 14 und einem Bodenbereich 15 auf. Innerhalb des kastenförmigen Gehäuses der Waschanlage 100 wird eine Waschkammer 10 ausgebildet, die nachfolgend unter Bezugnahme auf die Darstellung in Fig. 3 näher beschrieben wird.

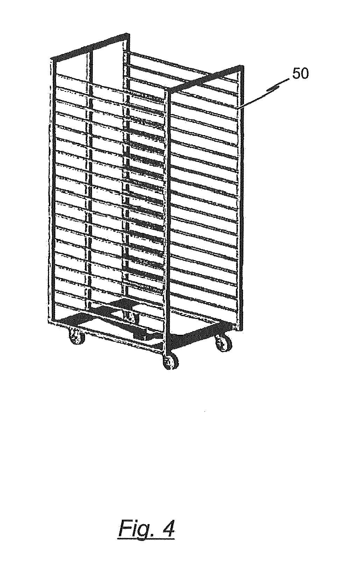

Wie es der Darstellung in Fig. 1 entnommen werden kann, ist die Seitenwand 13-1 des kastenförmigen Gehäuses als eine mit einer Tür 12 verschließbare Eingangs- und Ausgangsseite ausgeführt. Über diese Eingangs-/Ausgangsseite ist das zu reinigende Spülgut 50 (vgl. Fig. 4) in die innerhalb des kastenförmigen Gehäuses der Waschanlage 100 ausgebildete Waschkammer 10 einbringbar und herausnehmbar. Hierfür bietet es sich an, an der Eingangs-/Ausgangsseite des kastenförmigen Gehäuses eine entsprechende Rampe 19 vorzusehen, um auch größeres Spülgut, wie beispielsweise Rauchwagen oder Stikkenwagen, problemlos der Waschkammer 10 zuführen zu können.

Es versteht sich von selbst, dass es nicht zwingend erforderlich ist, in ein und derselben Seitenwand 13-1 des kastenförmigen Gehäuses sowohl die Eingangsals auch die Ausgangsseite vorzusehen. So ist es beispielsweise auch denkbar, die Seitenwand 13-1 als Eingangsseite und die gegenüberliegende Seitenwand 13-3 als Ausgangsseite auszubilden. Auch ist die Erfindung nicht auf eine Tür 12 beschränkt, mit welcher die Eingangs-/Ausgangsseite des kastenförmigen Gehäuses verschließbar ist. Gleichwohl ist beispielsweise auch eine Rollladenanordnung etc. zum Verschließen der Waschkammer 10 denkbar.

An der als Eingangs- und Ausgangsseite ausgebildeten Seitenwand 13-1 des kastenförmigen Gehäuses ist ferner ein Bedienfeld 21 vorgesehen, über welches Parameter zum Betreiben der Waschanlage 100 von einem Bediener eingebbar sind. Das Bedienfeld 21 ist mit einer in der Waschanlage 100 integrierten Steuereinrichtung 20 (vgl. Fig. 3) verbunden.

Angrenzend zu der als Eingangs- und Ausgangsseite ausgebildeten Seitenwand 13-1 ist in der Seitenwand 13-4 eine Wartungstür 17 vorgesehen, über welche beispielsweise aus Wartungsgründen auf die Komponenten des Wasch- und Reinigungssystems zugegriffen werden kann.

Bei der in Fig. 1 dargestellten Ausführungsform der erfindungsgemäßen Waschanlage 100 ist ferner eine optische Warneinrichtung 22 vorgesehen. Im Betrieb der Waschanlage 100 wird damit optisch angezeigt, dass die Tür 12 nicht geöffnet werden darf.

Nachfolgend wird unter Bezugnahme auf die Darstellung in Fig. 3 die in der Waschkammer 10 der Waschanlage 100 vorgesehenen Komponenten näher beschrieben. Im Einzelnen ist in Fig. 3 die Waschkammer 10 der in Fig. 1 dargestellten Waschanlage 100 ohne das kastenförmige Gehäuse gezeigt. In der Waschkammer 10 ist bereits ein zu reinigendes Spülgut 50 (hier: ein Stikkenwagen) eingebracht.

Wie es der Darstellung in Fig. 3 entnommen werden kann, weist die exemplarische Ausführungsform der erfindungsgemäßen Waschanlage 100 ein Waschsystem mit einer Vielzahl von in der Waschkammer 10 angeordneten Reinigersprühdüsen 1a, 1b, 1c, 1d, 1e auf. Zu dem Waschsystem gehört ferner ein Reinigerzufuhrleitungssystem 2, über welches im Reinigungsbetrieb der Waschanlage 100 den Reinigersprühdüsen 1a, 1b, 1c, 1d, 1e Reiniger zuführbar ist. Zu diesem Zweck weist das Waschsystem ferner eine Reinigerpumpe 3 auf, deren druckseitiger Ausgang mit dem Reinigerzufuhrleitungssystem 2 verbunden oder verbindbar ist.

Im Einzelnen, und wie der Darstellung in Fig. 3 entnommen werden kann, gehört zu der Reinigerpumpe 3 ein Schaumgenerator 4, in welchem eine mit Hilfe der Reinigerpumpe 3 über eine Zuleitung 30 zugeführte schäumbare Reinigerflüssigkeit in Reinigerschaum umgewandelt wird. Hierzu weist der Schaumgenerator 4 zusätzlich einen Drucklufteinlass (nicht explizit in Fig. 3 dargestellt) auf. Mit der über den Drucklufteinlass dem Schaumgenerator 4 zugeführten Druckluft einerseits und der mit Hilfe der Reinigerpumpe 3 über die Zuleitung 30 zugeführten Reinigerflüssigkeit andererseits wird innerhalb des Schaumgenerators 4 Reinigerschaum erzeugt und über den Auslass 5 des Schaumgenerators 4 dem Reinigerzufuhrleitungssystem 2 und den mit dem Reinigerzufuhrleitungssystem 2 verbundenen Reinigersprühdüsen 1a, 1b, 1c, 1d, 1e zugeführt. Auf diese Weise wird im Reinigungsbetrieb der Waschanlage 100 über die Reinigersprühdüsen 1a, 1b, 1c, 1d, 1e Reinigerschaum auf das in der Waschkammer 10 angeordnete Spülgut (hier: Stikkenwagen 50) gesprüht.

Bei der in Fig. 3 dargestellten Ausführungsform sind die Reinigersprühdüsen 1a, 1b, 1c, 1d, 1e ortsfest angeordnet. Um eine gleichmäßige Verteilung des im Reinigungsbetrieb der Waschanlage 100 über die Reinigersprühdüsen 1a, 1b, 1c, 1d, 1e versprühten Reinigerschaums auf dem Spülgut 50 erreichen zu können, ist im Bodenbereich der Waschkammer 10 eine Aufnahme 11 in Gestalt eines Drehtellers vorgesehen. Diese Aufnahme 11 ist über eine mit der Steuereinrichtung 20 ansteuerbare Antriebseinrichtung (nicht dargestellt) derart antreibbar, dass das von der Aufnahme 11 aufgenommene Spülgut 50 relativ zu den Reinigersprühdüsen 1a, 1b, 1c, 1d, 1e in einer horizontalen Ebene gedreht wird. Diese Drehbewegung ist in Fig. 3 mit einem Pfeil angedeutet.

Um zu verhindern, dass sich das Spülgut 50 relativ zu der Aufnahme 11 beim Drehen der Aufnahme 11 bewegt, ist die Aufnahme 11 mit entsprechenden Arretierungen 11', beispielsweise in Gestalt von Mulden, in denen die Räder des Stikken- oder Rauchwagens aufgenommen werden können, ausgerüstet.

Die in den Zeichnungen dargestellte exemplarische Waschanlage 100 weist zusätzlich zu dem Waschsystem auch ein Klarspülsystem auf, welches eine Vielzahl von in der Waschkammer 10 angeordneten Klarspüldüsen 6a, 6b, 6c und ein mit den Klarspüldüsen 6a, 6b, 6c verbundenes oder verbindbares Klarspülflüssigkeits-Zufuhrleitungssystem 7 aufweist. Über dieses Klarspülflüssigkeits-Zufuhrleitungssystem 7 wird im Klarspülbetrieb der Waschanlage 100 Klarspülflüssigkeit, insbesondere Frischwasser mit gegebenenfalls zudosiertem Klarspüler, den Klarspüldüsen 6a, 6b, 6c zugeführt. Diese Klarspülflüssigkeit wird auf das Spülgut 50 gesprüht, um den an dem Spülgut 50 anhaftenden Reinigerschaum abzuspülen.

Wie es der Darstellung in Fig. 3 entnommen werden kann, ist in der Mitte der Aufnahme 11 eine Abflussöffnung 32 vorgesehen, über welche die im Klarspülbetrieb der Waschanlage 100 versprühte Klarspülflüssigkeit zusammen mit dem abgespülten Reinigerschaum aus der Waschkammer 10 abgeführt wird. Diese Abflussöffnung 32 ist - wie es der Darstellung in Fig. 2 entnommen werden kann - über eine Abflussleitung 18 mit einem Abwassersystem verbunden.

Das Klarspülsystem der in den Zeichnungen exemplarisch dargestellten Waschanlage 100 weist ferner eine Klarspülpumpe 8 auf, deren saugseitiger Einlass mit einem Klarspülflüssigkeitstank 9 und deren druckseitiger Auslass mit dem Klarspülflüssigkeits-Zufuhrleitungssystem 7 verbunden oder verbindbar ist. Obwohl nicht explizit dargestellt, ist es denkbar, innerhalb des Klarspülflüssigkeitstanks 9 eine über die Steuereinrichtung 20 ansteuerbare Heizung vorzusehen, um bedarfsweise die in dem Klarspülflüssigkeitstank 9 aufgenommene Klarspülflüssigkeit zu erwärmen.

Alternativ hierzu ist es selbstverständlich aber auch denkbar, das Klarspülflüssigkeits-Leitungssystem 7 direkt mit der Frischwasserzufuhrleitung 31 zu verbinden.

Die in Fig. 3 schematisch dargestellte Steuereinrichtung 20 dient zum bedarfsweisen Ansteuern der ansteuerbaren Komponenten des Waschsystems und des Klarspülsystems, wobei die Steuereinrichtung 20 insbesondere derart ausgebildet ist, den Klarspülbetrieb der Waschanlage 100, während welchem Klarspülflüssigkeit in der Waschkammer 10 über die Klarspüldüsen 6a, 6b, 6c versprüht wird, erst nach Beendigung des Reinigungsbetriebs der Waschanlage 100, während welchem Reinigerschaum in der Waschkammer 10 über die Reinigersprühdüsen 1a, 1b, 1c, 1d, 1e versprüht wird, zu initiieren. Insbesondere ist die Steuereinrichtung 20 ausgelegt, den Klarspülbetrieb der Waschanlage 100 zeitlich verzögert zu initiieren, und zwar erst nachdem der Reinigerschaum in der Waschkammer 10 über die Reinigersprühdüsen 1a, 1b, 1c, 1d, 1e versprüht wurde. Die Dauer der zeitlichen Verzögerung bestimmt die Einwirk- bzw. Kontaktzeit der in dem Reinigerschaum enthaltenen Reinigerchemikalien und ist vorzugsweise abhängig von dem Verschmutzungsgrad des zu reinigenden Spülguts 50 über das Bedienfeld 21 (vgl. Fig. 1) einstellbar.

Des Weiteren ist die Steuereinrichtung 20 vorzugsweise derart ausgebildet, dass diese die Antriebseinrichtung der Aufnahme 11 nur dann ansteuert, wenn im Reinigungsbetrieb der Waschanlage 100 über die Reinigersprühdüsen 1a, 1b, 1c, 1d, 1e der Reinigerschaum versprüht wird, und wenn im Klarspülbetrieb der Waschanlage 100 die Klarspülflüssigkeit über die Klarspüldüsen 6a, 6b, 6c versprüht wird.

Die vorliegende Erfindung ist nicht auf die unter Bezugnahme auf die Zeichnungen dargestellte exemplarische Ausführungsform der Waschanlage 100 beschränkt. Insbesondere ist es denkbar, mindestens eine der Reinigersprühdüsen 1a, 1b, 1c, 1d, 1e als Schaumdüse auszubilden, welche bei Zufuhr einer schäumbaren Reinigerflüssigkeit am Düsenauslass Reinigerschaum erzeugt.

Ferner ist es denkbar, die Reinigersprühdüsen 1a, 1b, 1c, 1d, 1e und/oder die Klarspüldüsen 6a, 6b, 6c nicht ortsfest relativ zu der Waschkammer 10 anzuordnen, sondern an einem Sprühdüsenträger, welcher relativ zu der Waschkammer bewegbar ist.

Darüber hinaus ist es denkbar, die Aufnahme 11 mindestens bereichsweise als Gitterrost auszubilden, um im Reinigungs- bzw. Klarspülbetrieb der Waschanlage 100 ein Ablaufen von Flüssigkeit aus der Waschkammer 10 zu ermöglichen.

Als Spülgut sind insbesondere Rauchwagen, Stikkenwagen, Utensilienwaren, Geräteträger, Paloxen, Gitterboxen, Container, Paletten und/oder Regale denkbar.

### Bezugszeichenliste

- 1a bis e: Reinigersprühdüse
- 2: Reinigerzufuhrleitungssystem
- 3: Reinigerpumpe
- 4: Schaumgenerator
- 5a: Reinigereinlass des Schaumgenerators
- 5b: Auslass des Schaumgenerators
- 6a bis c: Klarspüldüse
- 7: Klarspülflüssigkeits-Zufuhrleitungssystem
- 8: Klarspülpumpe
- 9: Klarspülflüssigkeitstank
- 10: Waschkammer
- 11: Aufnahme/Dreteller
- 11': Arretierung
- 12: Öffnung/Tür
- 13-1 bis 13-4: Seitenwand
- 14: Gehäusedecke
- 15: Bodenbereich
- 16: Abwassersystem
- 17: Wartungstür
- 18: Ablauf
- 19: Rampe
- 20: Steuereinrichtung
- 21: Bedienfeld
- 22: optische Warneinrichtung
- 30: Zuleitung für Reiniger-Schäumer-Wasser-Gemisch
- 31: Frischwasserzuleitung
- 32: Öffnung in der Aufnahme/Drehteller
- 50: Spülgut
- 100: Waschanlage

## Patentansprüche

1. Waschanlage (100) zum Reinigen von insbesondere sperrigem Spülgut (50), wie etwa Rauchwagen oder Stikkenwagen, wobei die Waschanlage (100) eine im Reinigungsbetrieb geschlossene Waschkammer (10) und ein Waschsystem mit mindestens einer in der Waschkammer (10) angeordneten Reinigersprühdüse (1a bis 1e) und einer über ein Reinigerzufuhrleitungssystem (2) mit der mindestens einen Reinigersprühdüse (1a bis 1e) verbundenen oder verbindbaren Reinigerpumpe (3) aufweist,
**dadurch gekennzeichnet, dass**
das Waschsystem mindestens eine Einrichtung zum Erzeugen von Reinigerschaum aufweist, welcher über die mindestens eine Reinigersprühdüse (1a bis 1e) im Reinigungsbetrieb der Waschanlage (100) auf das in der Waschkammer (10) angeordnete Spülgut (50) auftragbar, insbesondere sprühbar ist.

2. Waschanlage (100) nach Anspruch 1,
wobei die mindestens eine Reinigersprühdüse (1a bis 1e) als Schaumdüse ausgebildet ist, welche einen über das Reinigerzufuhrleitungssystem (2) mit der Reinigerpumpe (3) verbundenen oder verbindbaren Reinigereinlass und einen Lufteinlass aufweist und ausgebildet ist, bei Zufuhr einer schäumbaren Reinigerflüssigkeit über den Reinigereinlass am Düsenauslass Reinigerschaum zu erzeugen,
wobei der Lufteinlass der als Schaumdüse ausgebildeten mindestens einen Reinigersprühdüse (1a bis 1e) mit einer Druckluftquelle verbunden oder verbindbar ist.

3. Waschanlage (100) nach einem der Ansprüche 1 oder 2
wobei das Waschsystem einen Schaumgenerator (4) aufweist, welcher einen Reinigereinlass und einen Lufteinlass aufweist und ausgebildet ist, bei Zufuhr einer schäumbaren Reinigerflüssigkeit über den Reinigereinlass Reinigerschaum zu erzeugen und diesen am Auslass (5) des Schaumgenerators (4) bereitzustellen, und wobei der Auslass (5) des Schaumgenerators (4) über das Reinigerzufuhrleitungssystem (2) mit der mindestens einen Reinigersprühdüse (1a bis 1e) verbunden oder verbindbar ist.

4. Waschanlage (100) nach einem der Ansprüche 1 bis 3,
wobei die Reinigerpumpe (3) über ihren saugseitigen Einlass mit einem Reinigertank und über ihren druckseitigen Auslass mit dem Reinigerzufuhrleitungssystem (2) verbunden oder verbindbar ist, und wobei ferner eine Dosiereinrichtung zum wahlweisen Eindosieren einer Aufschäumerlösung in die mittels der Reinigerpumpe (3) angesaugte Reinigerlösung vorgesehen ist.

5. Waschanlage (100) nach Anspruch 4,
wobei eine Steuereinrichtung (20) vorgesehen ist, über welche abhängig von dem Verschmutzungsgrad des zu reinigenden Spülguts (50) die Dosiereinrichtung ansteuerbar ist.

6. Waschanlage (100) nach einem der Ansprüche 1 bis 5,
wobei die mindestens eine Reinigersprühdüse (1a bis 1e) auf einem relativ zu einem in der Waschkammer (10) aufgenommenen Spülgut (50) bewegbaren Sprühdüsenträger angeordnet ist.

7. Waschanlage (100) nach einem der Ansprüche 1 bis 6,
wobei die Waschanlage (100) ferner eine relativ zu der mindestens einen Reinigersprühdüse (1a bis 1e) bewegbare, insbesondere in der horizontalen Ebene drehbare Aufnahme (11) vorzugsweise in Gestalt eines Drehtellers zum Aufnehmen des zu reinigenden Spülgutes (50) aufweist,
wobei die Aufnahme (11) mindestens bereichsweise als Gitterrost ausgebildet ist, und wobei im Bodenbereich der Waschkammer (10) ein mit einem Abwassersystem verbundener oder verbindbarer Abfluss vorgesehen ist.

8. Waschanlage (100) nach Anspruch 7,
wobei der Bodenbereich der Waschkammer (10) als Pumpensumpf ausgebildet ist, und wobei ferner eine Abwasserpumpe vorgesehen ist, deren saugseitiger Einlass mit dem Pumpensumpf und deren druckseitiger Auslass mit einem Abwassersystem verbunden oder verbindbar ist.

9. Waschanlage (100) nach einem der Ansprüche 1 bis 8,
wobei ferner ein Klarspülsystem vorgesehen ist mit mindestens einer in der Waschkammer (10) angeordneten Klarspüldüse (6a bis 6c) und einem mit der mindestens einen Klarspüldüse (6a bis 6c) verbundenen oder verbindbaren Klarspülflüssigkeits-Zufuhrleitungssystem (7) zum Zuführen von Klarspülflüssigkeit, insbesondere Frischwasser, zu der mindestens einen Klarspüldüse (6a bis 6c) in einem Klarspülbetrieb der Waschanlage (100), wobei das Klarspülsystem ferner eine Klarspülpumpe (8) aufweist, deren saugseitiger Einlass mit einem Klarspülflüssigkeitstank (9) und deren druckseitiger Auslass mit dem Klarspülflüssigkeits-Zufuhrleitungssystem (7) verbunden oder verbindbar ist.

10. Waschanlage (100) nach Anspruch 9,
wobei in dem Klarspülflüssigkeitstank (9) eine über eine Steuereinrichtung (20) ansteuerbare Heizung vorgesehen ist zum bedarfsweisen Erwärmen einer in dem Klarspülflüssigkeitstank (9) aufgenommenen Klarspülflüssigkeit.

11. Waschanlage (100) nach einem der Ansprüche 9 oder 10,
wobei das Klarspülflüssigkeits-Leitungssystem (7) mit einem bauseitigen Frischwassernetz verbunden oder verbindbar ist.

12. Waschanlage (100) nach einem der Ansprüche 9 bis 11,
wobei eine Steuereinrichtung (20) vorgesehen ist zum bedarfsweisen Ansteuern von ansteuerbaren Komponenten des Waschsystems und/oder des Klarspülsystems, wobei die Steuereinrichtung (20) ausgebildet ist, den Klarspülbetrieb der Waschanlage (100), während welchem Klarspülflüssigkeit in der Waschkammer (10) versprüht wird, erst nach Beendigung des Reinigungsbetriebs der Waschanlage (100), während welchem Reinigerschaum in der Waschkammer (10) versprüht wird, zu initiieren.

13. Waschanlage (100) nach Anspruch 12,
wobei die Steuereinrichtung (20) ausgebildet ist, den Klarspülbetrieb der Waschanlage (100), während welchem Klarspülflüssigkeit in der Waschkammer (10) versprüht wird, zeitlich verzögert zu initiieren, und zwar nachdem der Reinigerschaum in der Waschkammer (10) versprüht wurde, wobei die Dauer der zeitlichen Verzögerung abhängig von dem Verschmutzungsgrad des zu reinigenden Sprühguts (50) einstellbar ist.

14. Waschanlage (100) nach einem der Ansprüche 12 oder 13,
wobei die Waschkammer (10) mindestens eine verschließbare Öffnung (12) aufweist, über welche das zu reinigende Spülgut (50) in die Waschkammer (10) einbringbar ist, wobei ferner eine Sensoreinrichtung vorgesehen ist zum Erfassen, ob die Öffnung (12) verschlossen ist, und wobei die Steuereinrichtung (20) ausgelegt ist, den Reinigungsbetrieb der Waschanlage (100) nur bei verschlossener Öffnung (12) zu initiieren.

15. Waschanlage (100) nach einem der Ansprüche 12 bis 14,
wobei die Waschanlage (100) eine relativ zu der mindestens einen Reinigersprühdüse (1a bis 1e) und relativ zu der mindestens einen Klarspüldüse (6a bis 6c) bewegbare, insbesondere in der horizontalen Ebene drehbare Aufnahme (11) vorzugsweise in Gestalt eines Drehtellers, aufweist zum Aufnehmen des zu reinigenden Spülguts (50), wobei die Aufnahme (11) über eine ansteuerbare Antriebseinrichtung antreibbar ist, und wobei die Steuereinrichtung (20) ausgelegt ist, nur während des Versprühens von Reinigerschaum im Reinigungsbetrieb der Waschanlage (100) und/oder nur während des Versprühens von Klarspülflüssigkeit im Klarspülbetrieb der Waschanlage (100) die Antriebseinrichtdung anzusteuern.
